# EUROPEAN PATENT APPLICATION

(11) **EP 4 304 241 A1**
(43) Date of publication of application: **10.01.2024**
(21) Application number: 21929068.1
(22) Date of filing: 04.03.2021
(51) Int. Cl.: H04W 24/10, H04W 56/00, H04W 72/04

(54) **TERMINAL, RADIO COMMUNICATION METHOD AND BASE STATION**

(71) Applicant: NTT DOCOMO, INC., Tokyo 100-6150 (JP)
(72) Inventor: KUMAGAI, Shinya, Tokyo 100-6150 (JP); NAKAMURA, Takuma, Tokyo 100-6150 (JP); OHARA, Tomoya, Tokyo 100-6150 (JP); KURITA, Daisuke, Tokyo 100-6150 (JP); NAGATA, Satoshi, Tokyo 100-6150 (JP)
(74) Representative: Hoffmann Eitle
(86) International application number: PCT/JP2021/008538
(87) International publication number: WO 2022/185496

(57) **Abstract**

A terminal according to one aspect of the present disclosure includes: a receiving section that receives a first synchronization signal in a first band; and a control section that simultaneously uses, when a notification indicating presence of a second synchronization signal in a second band is received, the first synchronization signal and the second synchronization signal for at least one of synchronization, reception quality measurement, and radio link quality monitoring. According to one aspect of the present disclosure, it is possible to appropriately use resources according to capability.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, Physical Uplink Shared Channel (PUSCH)) and a UL control channel (for example, a Physical Uplink Control Channel (PUCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed, for future radio communication systems (for example, Rel. 17 (or later versions)), to introduce terminals supporting to various use cases such as IoT.

However, it is not clear how UEs having different capabilities/categories use resources. Unless resources are used appropriately, system performance may decrease, for example, resource usage efficiency may decrease.

Thus, an object of the present disclosure is to provide a terminal, a radio communication method, and a base station that can appropriately use resources according to capability.

### Solution to Problem

A terminal according to one aspect of the present disclosure includes: a receiving section that receives a first synchronization signal in a first band; and a control section that simultaneously uses, when a notification indicating presence of a second synchronization signal in a second band is received, the first synchronization signal and the second synchronization signal for at least one of synchronization, reception quality measurement, and radio link quality monitoring.

### Advantageous Effects of Invention

According to one aspect of the present disclosure, it is possible to appropriately use resources according to capability.

### Brief Description of Drawings

[FIG. 1] FIG. 1 is a diagram to show an example of a radio communication system in which a plurality of kinds of UEs coexist.
[FIG. 2] FIG. 2 is a diagram to show an example of a baseline channel and an additional channel.
[FIG. 3] FIG. 3 is a diagram to show an example of a baseline channel and a plurality of additional channels.
[FIG. 4] FIG. 4 is a diagram to show an example of a correspondence relationship between a B-SS and A-SSs.
[FIG. 5] FIG. 5 is a diagram to show an example of a schematic structure of a radio communication system according to one embodiment.
[FIG. 6] FIG. 6 is a diagram to show an example of a structure of a base station according to one embodiment.
[FIG. 7] FIG. 7 is a diagram to show an example of a structure of a user terminal according to one embodiment.
[FIG. 8] FIG. 8 is a diagram to show an example of a hardware structure of the base station and the user terminal according to one embodiment.

### Description of Embodiments

### <Traffic Type / Service>

In future radio communication systems (for example, NR), traffic types (also referred to as services, service types, communication types, use cases, or the like), such as further enhancement of a mobile broadband (for example, enhanced Mobile Broadband (eMBB)), machine type communication that implements multiple simultaneous connection (for example, massive Machine Type Communications (mMTC), Internet of Things (IoT)), and highly reliable and low latency communication (for example, Ultra-Reliable and Low-Latency Communications (URLLC)), are assumed. For example, in URLLC, lower latency and higher reliability than those of eMBB are required.

The traffic type may be identified based on at least one of the following in a physical layer.
- Priority
- Logical channel having a different priority
- Modulation and coding scheme (MCS) table (MCS index table)
- Channel quality indication (CQI) table
- DCI format
- (Radio network temporary indicator (RNTI (System Information-Radio Network Temporary Identifier))) used for scrambling (masking) of cyclic redundancy check (CRC) bits included in (added to) the DCI (DCI format)
- RRC (Radio Resource Control) parameter
- Specific RNTI (for example, an RNTI for URLLC, an MCS-C-RNTI, or the like)
- Search space
- Field in DCI (for example, a newly added field or reuse of an existing field, a priority field)

Specifically, the traffic type of an HARQ-ACK for a PDSCH may be determined based on at least one of the following.
- MCS index table used to determine at least one of a modulation order, a target code rate, and a transport block size (TBS) of the PDSCH (for example, whether to use MCS index table 3)
- RNTI used for CRC scrambling of DCI used for scheduling of the PDSCH (for example, whether the DCI is CRC-scrambled with a C-RNTI or an MCS-C-RNTI)

The traffic type of an SR may be determined based on a higher layer parameter used as an identifier of the SR (SR-ID). The higher layer parameter may indicate whether the traffic type of the SR is eMBB or URLLC.

The traffic type of CSI may be determined based on configuration information related to CSI report (CSIreportSetting), a DCI type used for triggering, a DCI transmission parameter, or the like. The configuration information, DCI type, or the like may indicate whether the traffic type of the CSI is eMBB or URLLC. The configuration information may be a higher layer parameter.

The traffic type of a PUSCH may be determined based on at least one of the following.
- MCS index table used to determine at least one of a modulation order, a target code rate, and a TBS of the PUSCH (for example, whether to use MCS index table 3)
- RNTI used for CRC scrambling of DCI used for scheduling of the PUSCH (for example, whether the DCI is CRC-scrambled with a C-RNTI or an MCS-C-RNTI)

The traffic type may be associated with a communication requirement (requirement on latency, error rate, or the like, required condition), data type (audio, data, or the like), and the like.

The difference between a requirement for URLLC and a requirement for eMBB may be that the latency of the URLLC being lower than the latency of the eMBB or may be that the requirement for URLLC includes a requirement on reliability.

For example, a requirement for eMBB on user (U)-plane latency may include that the downlink U-plane latency is 4 ms and the uplink U-plane latency is 4 ms. In contrast, a requirement for URLLC on U-plane latency may include that the downlink U-plane latency is 0.5 ms and the uplink U-plane latency is 0.5 ms. The requirement for URLLC on reliability may include that a 32-byte error rate in U-plane latency of 1 ms is 10⁻⁵.

As enhanced Ultra Reliable and Low Latency Communications (eURLLC), reliability enhancement of traffic for unicast data is mainly under study. In the following, URLLC and eURLLC are referred to simply as URLLC when URLLC and eURLLC are not distinguished from each other.

For Rel-16 (or later version) NR, it is studied to set a plurality of levels (for example, two levels) of priority for a specific signal or channel. For example, it is assumed to control communication (for example, transmission control at the time of collision and the like) by setting a different priority for a signal or a channel corresponding to each traffic type (also referred to as service, service type, communication type, use case, and the like). In this way, communication can be controlled by setting a different priority for the same signal or channel according to service type and the like.

The priority of URLLC may be higher than the priority of eMBB. Priority "high" (high priority, 1) may be set for URLLC, and priority "low" (low priority, 0) may be set for eMBB.

### <Analysis>

It is assumed, for future radio communication systems/network (for example, 6G), to support a larger variety of use cases / terminals than those in 5G NR, for further improvement of communication speed / capacity / reliability / latency performance / multi-connection and the like and also enhancement to new fields such as sensing.

In LTE and NR, functions reduced from mandatory functions supported by existing terminals are defined as UE category/capability for the Internet of Things (IoT). This UE category/capability is, for example, enhanced machine type communication (eMTC) in LTE, narrow band (NB)-IoT, and reduced capability (RedCap) in NR. Meanwhile, additional functions to compensate for degradation of characteristics due to the function reduction are needed.

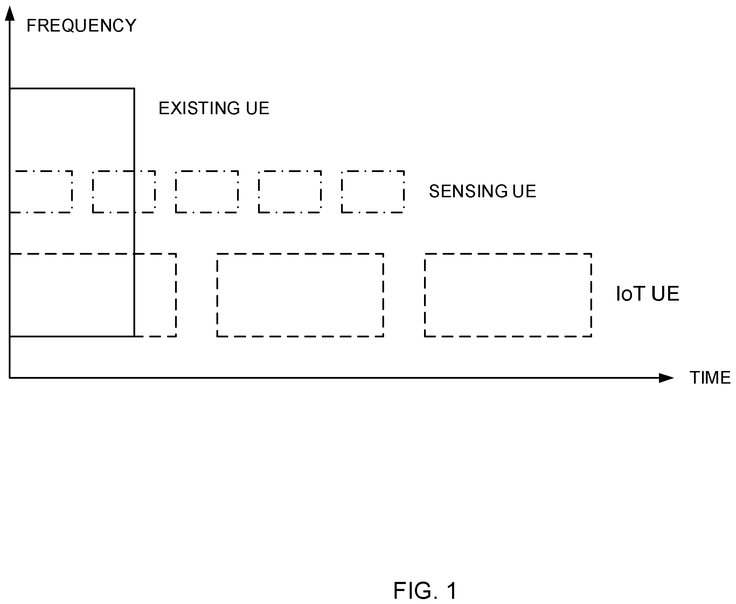

As in the example in FIG. 1, existing UEs each of which performs communication in a wide band in a short time, IoT UEs each of which uses a narrower band, a longer time, and repetition, and sensing UEs each of which uses a narrower band and a smaller piece of information coexist in some cases.

In future radio communication systems, efficient coexisting with existing UEs may be difficult when function addition is performed for each use case / terminal.

Thus, the inventors of the present invention came up with the idea of a method using an appropriate resource for transmission and/or reception according to use case / terminal.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a subset, and the like may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and a configuration may be interchangeably interpreted.

The MAC signaling may use, for example, a MAC control element (MAC CE), a MAC Protocol Data Unit (PDU), or the like. In the present disclosure, a MAC CE, an update command, and an activation/deactivation command may be interchangeably interpreted.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state / QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, and a DL-RS, a DL-RS source, an SSB, a CSI-RS, or an SRS having QCL type X may be interchangeably interpreted.

In the present disclosure, a panel, an Uplink (UL) transmission entity, a TRP, a spatial relation, a control resource set (CORESET), a PDSCH, a codeword, a base station, an antenna port of a given signal (for example, a demodulation reference signal (DMRS) port), an antenna port group of a given signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (multi-input multi-output (MIMO) layer, a transmission layer, a spatial layer) may be interchangeably interpreted. A panel Identifier (ID) and a panel may be interchangeably interpreted. In the present disclosure, a TRP ID and a TRP may be interchangeably interpreted.

In the present disclosure, a waveform, whether a discrete Fourier transform (DFT)-spread (S)-OFDM using CP-OFDM is used, and whether transform precoding is disabled or enabled may be interchangeably interpreted.

In the present disclosure, the following abbreviations may be used.
- time division multiplexing (TDM)
- frequency division multiplexing (FDM)
- code division multiplexing (CDM)
- subcarrier spacing (SCS)
- cyclic prefix (CP)
- radio network temporary identifier (RNTI)
- modulation and coding scheme (MCS)
- transport block size (TBS)
- wake up signal (WUS)
- radio link monitoring (RLM)
- radio resource management (RRM)
- cell-specific RS (CRS)
- tracking RS (TRS)

In the present disclosure, capability, a category, a type, a UE, a traffic type, a service, a service type, a communication type, and a use case may be interchangeably interpreted.

In the present disclosure, a notification, a configuration, a parameter, an RRC information element, and a MAC CE may be interchangeably interpreted.

In the present disclosure, measurement, calculation, monitoring, and report may be interchangeably interpreted.

### (Radio Communication Method)

One or more baseline channels may be defined/configured. One or more additional channels may be defined/configured/activated.

In the present disclosure, a channel, a band, a carrier, a component carrier, a bandwidth part (BWP), a partial band, a band, a resource, a resource set, a block, a signal block, one or more RBs, one or more REs, a period, a window, and an RB set may be interchangeably interpreted.

In the present disclosure, baseline, primary, first, fallback, base, default, #0, and index 0 may be interchangeably interpreted. In the present disclosure, additional, secondary, second, non-fallback, supplementary, enhanced, a number of a specific value (for example, 1) or larger, and an index of a specific value (for example, 1) or larger may be interchangeably interpreted.

One or more additional channels may be FDMed/TDMed/CDMed to a baseline channel.

A specific type of signal in a baseline channel may be referred to as a baseline signal. A specific type of signal in an additional channel may be referred to as an additional signal.

In the present disclosure, RLM, radio link quality measurement, a link recovery procedure, beam failure detection, a beam recovery procedure, and candidate beam detection may be interchangeably interpreted.

### <First Embodiment>

### <<Baseline Channel>>

A UE may perform transmission/reception (transmission and/or reception, UL/DL) in a baseline channel when there is no specific configuration/notification (parameter, information element) from a network (NW, for example, a base station).

A UE of any category/capability (both a UE having specific capability and a UE not having the specific capability) may be able to perform transmission and/or reception in the baseline channel (may support transmission and/or reception in the baseline channel). The any category/capability may include eMBB, URLLC, and IoT.

A parameter related to transmission and/or reception in the baseline channel (resource (for example, frequency, bandwidth, band, initiation timing, duration, periodicity) of the baseline channel) may follow at least one of determination methods 1 and 2 below.

### {Determination Method 1}

The parameter related to transmission and/or reception in the baseline channel may be defined in a specification.

### {Determination Method 2}

The parameter related to transmission and/or reception in the baseline channel may be configured by the NW. The parameter (configuration information) related to transmission and/or reception in the baseline channel may follow at least one of configuration methods 1 and 2 below.

### {{Configuration Method 1}}

The parameter related to transmission and/or reception in the baseline channel may be configured as system information in a cell-common manner.

### {{Configuration Method 2}}

The parameter related to transmission and/or reception in the baseline channel may be configured in a UE-dedicated (specific) manner by higher layer signaling.

The configuration information related to the baseline channel may include at least one of configuration information 1 and configuration information 2 below.

### {Configuration Information 1}

The configuration information related to the baseline channel includes configuration information for transmission of a UL signal / UL channel in the baseline channel. The UL signal / UL channel may be a signal/channel to be used for at least one of initial access (random access), control, data, positioning (position estimation), detection, synchronization (time/frequency synchronization), demodulation, measurement (reception quality measurement, radio link quality measurement), channel estimation, and discovery, or may be a reference signal.

The configuration information related to transmission of a UL signal / UL channel may include at least one of an SCS, a CP length, a waveform, a time/frequency/code resource for transmission, a transmission signal sequence, an RNTI, transmission power, precoding, an antenna port, repetition, frequency hopping, an MCS, and a TBS.

### {Configuration Information 2}

The configuration information related to the baseline channel includes configuration information for reception of a DL signal / DL channel in the baseline channel. The DL signal / DL channel may be a signal/channel to be used for at least one of synchronization (synchronization signal), broadcasting (MIB/SIB, paging/WUS), initial access (random access), connection management (RLM/RRM), time/frequency synchronization (CRS/TRS), control, data, positioning (position estimation), detection, demodulation, measurement (reception quality measurement, radio link quality measurement), channel estimation, and discovery, or may be a reference signal.

The configuration information related to reception of a DL signal / DL channel may include at least one of an SCS, a CP length, a waveform, a time/frequency/code resource for reception, a reception signal sequence, an RNTI, transmission power, precoding, an antenna port, repetition, frequency hopping, an MCS, and a TBS.

A range in which a base channel is configured/defined may follow at least one of ranges 1 to 3 below.

### {Range 1}

The base channel is configured/defined only in a cell in which the UE performs initial access (random access). The cell may be a PCell/PSCell.

### {Range 2}

The base channel is configured/defined for any cell. The cell may be a PCell/PSCell/SCell.

### {Range 3}

The base channel is configured/defined only for a specific cell. The specific cell may be a cell in a specific frequency range (FR) / band or may be a cell using a specific duplex scheme. For example, the specific cell may be an FDD cell in FR1. The specific cell may be a cell having a coverage larger than the coverage of another cell (for example, a TDD cell). The specific frequency range may be a frequency range (for example, FR1) equal to or lower than a specific frequency (for example, 6 GHz, 24.25 GHz, or 52.6 GHz).

According to this embodiment, the UE can appropriately perform transmission and/or reception using a baseline channel.

### <Second Embodiment>

### <<Additional Channel>>

The UE may perform transmission/reception (transmission and/or reception, UL/DL) in one or more additional channels when there is a specific configuration/notification from the NW. The UE may perform transmission and/or reception in a baseline channel and an additional channel when there is a specific configuration/notification from the NW. The UE may receive a specific configuration/notification in the baseline channel.

A UE of a specific category/capability (only a UE having specific capability) may be able to perform transmission and/or reception in the one or more additional channels (may support transmission and/or reception in the one or more additional channels). The specific category/capability may include eMBB and URLLC. A specific UE may report the specific capability. The specific UE may report the specific capability in the baseline channel. When the NW receives report about the specific capability from the UE, the NW may transmit a specific configuration/notification to the UE.

The UE may perform transmission/reception (transmission and/or reception, UL/DL) in the one or more additional channels when the UE has reported the specific capability. The UE may perform transmission and/or reception in the baseline channel and the additional channel when the UE has reported the specific capability.

The UE may perform transmission and/or reception in the baseline channel and the additional channel when there is no specific configuration/notification from the NW.

A parameter related to transmission and/or reception in the one or more additional channels (resources (for example, frequency, bandwidth, band, initiation timing, duration, periodicity) of the one or more additional channels) may follow at least one of determination methods 1 and 2 below.

### {Determination Method 1}

The parameter related to transmission and/or reception in the additional channel may be defined in a specification.

### {Determination Method 2}

The parameter related to transmission and/or reception in the additional channel may be configured by the NW. The parameter (configuration information) related to transmission and/or reception in the additional channel may follow at least one of configuration methods 1 and 2 below.

### {{Configuration Method 1}}

The parameter related to transmission and/or reception in the additional channel may be configured as system information in a cell-common manner.

### {{Configuration Method 2}}

The parameter related to transmission and/or reception in the additional channel may be configured in a UE-dedicated (specific) manner by higher layer signaling.

The configuration information related to the additional channel may include at least one of configuration information 1 and configuration information 2 below.

### {Configuration Information 1}

The configuration information related to the additional channel includes configuration information for transmission of UL signal / UL channel in the additional channel. The UL signal / UL channel may be a signal/channel to be used for at least one of initial access (random access), control, data, positioning, and measurement, or may be a reference signal.

The configuration information related to transmission of a UL signal / UL channel may include at least one of an SCS, a CP length, a waveform, a time/frequency/code resource for transmission, a transmission signal sequence, an RNTI, transmission power, precoding, an antenna port, repetition, frequency hopping, an MCS, and a TBS.

### {Configuration Information 2}

The configuration information related to the additional channel includes configuration information for reception of a DL signal / DL channel in the additional channel. The DL signal / DL channel may be a signal/channel to be used for at least one of synchronization (synchronization signal), broadcasting (MIB/SIB, paging/WUS), initial access (random access), connection management (RLM/RRM), time/frequency synchronization (CRS/TRS), control, data, positioning, measurement, discovery, and detection, or may be a reference signal.

The configuration information related to reception of a DL signal / DL channel may include at least one of an SCS, a CP length, a waveform, a time/frequency/code resource for reception, a reception signal sequence, an RNTI, transmission power, precoding, an antenna port, repetition, frequency hopping, an MCS, and a TBS.

A range in which the additional channel is configured/defined may follow at least one of ranges 1 to 3 below.

### {Range 1}

The additional channel may be configured/defined only for a cell for which the baseline channel is configured or a cell for which the baseline channel is not configured.

### {Range 2}

The additional channel is configured/defined for any cell. The cell may be a PCell/PSCell/SCell.

### {Range 3}

The additional channel is configured/defined only for a specific cell. The specific cell may be a cell in a specific frequency range (FR) / band or may be a cell using a specific duplex scheme. For example, the specific cell may be a TDD cell in FR1/2/x or may be a cell in FR2/x. FRx may be a frequency range higher than FR2. The specific cell may be a cell having a bandwidth larger than the bandwidth of another cell (for example, an FDD cell). The specific frequency range may be a frequency range (for example, FR2/x) equal to or higher than a specific frequency (for example, 6 GHz, 24.25 GHz, or 52.6 GHz).

The UE may perform at least one of signal detection, time/frequency synchronization, demodulation, measurement (reception quality measurement / radio link quality measurement), channel estimation, position estimation, reception of a DL signal / DL channel, transmission of a UL signal / UL channel, and reference signal transmission by using at least one of the baseline channel and the additional channel. The UE may perform at least one of signal detection, time/frequency synchronization, demodulation, measurement (reception quality measurement / radio link quality measurement), channel estimation, position estimation, reception of a DL signal / DL channel, transmission of a UL signal / UL channel, and reference signal transmission by using both the baseline channel and the additional channel.

The specific UL signal / UL channel may be over both the baseline channel and the additional channel. The specific DL signal / DL channel may be over both the baseline channel and the additional channel.

Any UE may be able to perform (may support) transmission/reception in the baseline channel, or a specific (part of) UE(s) may be able to perform (may support) transmission/reception in the additional channel. The additional channel may be optimized for the specific UE/support. The UE may maintain connection by using the baseline channel and may use the additional resource in the additional channel.

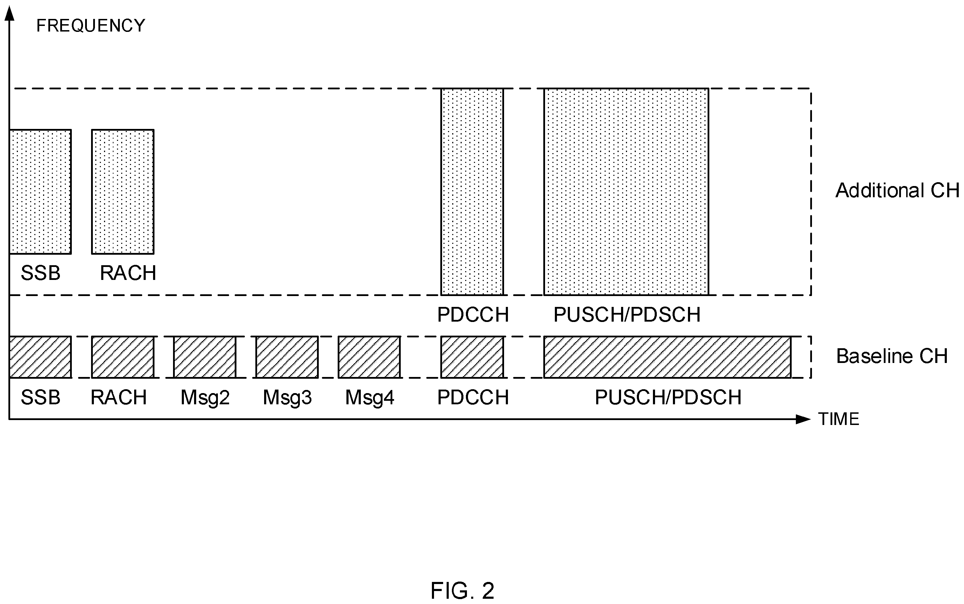

In the example in FIG. 2, the UE may perform at least one of reception of an SSB, transmission of an RACH, reception of Msg2, transmission of Msg3, reception of Msg4, reception of a subsequent PDCCH, and PUSCH transmission / PDSCH reception scheduled by the PDCCH, in the baseline channel. The UE may perform at least one of reception of an SSB, transmission of an RACH, reception of a subsequent PDCCH, and PUSCH transmission / PDSCH reception scheduled by the PDCCH, in the additional channel.

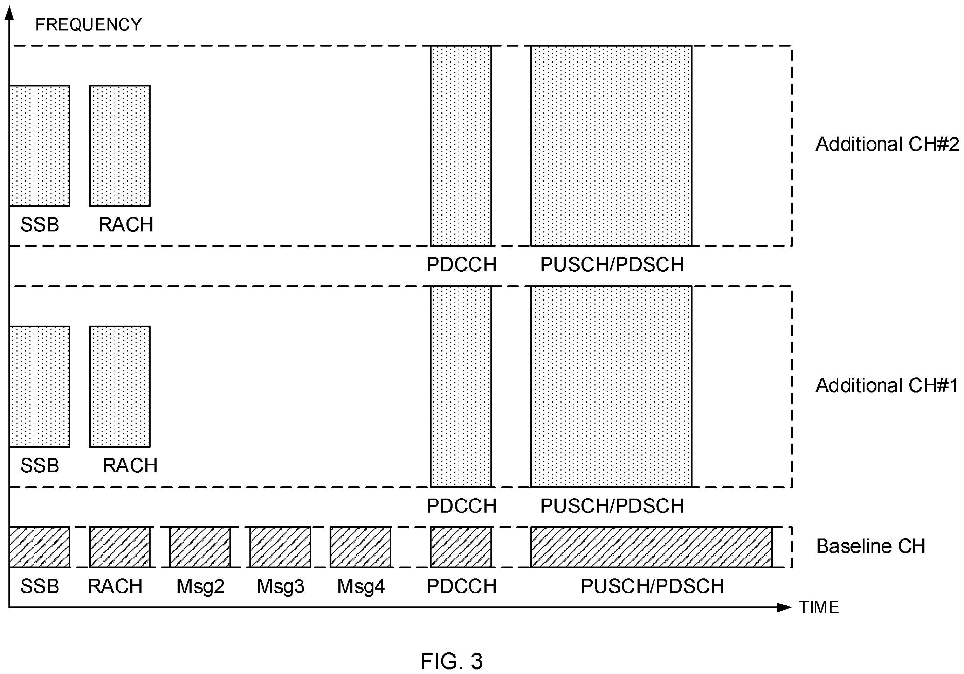

In the example in FIG. 3, the UE may perform at least one of reception of an SSB, transmission of an RACH, reception of Msg2, transmission of Msg3, reception of Msg4, reception of a subsequent PDCCH, and PUSCH transmission / PDSCH reception scheduled by the PDCCH, in the baseline channel. The UE may perform at least one of reception of an SSB, transmission of an RACH, reception of a subsequent PDCCH, and PUSCH transmission / PDSCH reception scheduled by the PDCCH, in additional channels #1/#2.

The UE may perform at least one of synchronization, broadcasting (MIB), initial access (random access), connection management (RLM/RRM), positioning, measurement, discovery, and detection by using a combination of an SSB in the baseline channel and an SSB(s) in the one or more additional channels. The UE may perform random access by using a combination of a RACH in the baseline channel and a RACH(s) in the one or more additional channels. The UE may perform reception/monitoring of a PDCCH (DCI) by using a combination of a PDCCH (resource, PDCCH candidate, CORESET) in the baseline channel and a PDCCH(s) (resource(s), PDCCH candidate(s), CORESET(s)) in the one or more additional channels. The UE may perform reception of DL data (DL-SCH, TB) by using a combination of a PDSCH in the baseline channel and a PDSCH(s) in the one or more additional channels. The UE may perform transmission of UL data (UL-SCH, TB) by using a combination of a PUSCH in the baseline channel and a PUSCH(s) in the one or more additional channels.

The UE may maintain RRC connection by using the baseline channel. The UE having a specific category/capability may use the one or more additional channels as a resource(s) added to the baseline channel.

The size of a specific type of channel/information/resource/payload in the additional channel may be larger than the size of a specific type of channel/information/resource/payload in the baseline channel. Information carried by the specific type of channel in the additional channel may include a field not present in information carried by the specific type of channel in the baseline channel.

The cell/CC in which the additional channel is present may be different from the cell/CC in which the baseline channel is present. The time resource of the additional channel may be different from or may entirely or partially overlap the time resource of the baseline channel.

The cell/CC in which the additional channel is present may be the same as the cell/CC in which the baseline channel is present. The frequency resource (for example, the BWP) of the additional channel may be different from or may entirely or partially overlap the frequency resource of the baseline channel in the cell. The time resource of the additional channel may be different from or may entirely or partially overlap the time resource of the baseline channel.

The UE may perform initial access / RRC connection procedure only by using the baseline channel or may perform initial access / RRC connection procedure by using the baseline channel and the additional channel.

A beam (spatial domain filter) used for a specific type of channel/signal in the additional channel may be the same as or different from a beam (spatial domain filter) used for a specific type of channel/signal in the baseline channel. The baseline channel and the one or more additional channel may be associated with the same TRP or may be associated with different TRPs.

According to this embodiment, the UE can appropriately perform transmission and/or reception by using an additional channel.

By the UE using a baseline channel and an additional channel, it is possible to achieve higher quality/efficiency than that in a case of using only a baseline channel.

The bandwidth of an additional channel may be larger than the bandwidth of a baseline channel. By the UE using an additional channel, it is possible to achieve higher quality/efficiency than that in a case of using a baseline channel.

### <Third Embodiment>

### <<Synchronization Signal>>

The UE may receive a synchronization signal in a baseline channel (baseline-synchronization signal, B-SS), for cell search.

The B-SS may be constituted of a plurality of signals (for example, a plurality of synchronization signals). Each of the plurality of signals may have a plurality of sequences different from each other. The plurality of signals may be TDMed/FDMed/CDMed to each other. For example, the plurality of signals may include a primary SS (PSS) and a secondary SS (SSS).

The start timing (frame / half frame / subframe / one or more slots/symbols, position of the start symbol for every one or more slots) of the B-SS may be determined based on the SCS of the B-SS.

The B-SS may be TDMed/FDMed/CDMed to at least one channel/RS of a channel notifying (carrying) a specific parameter and an RS for demodulation. For example, the channel/RS may be a PBCH, a DMRS for PBCH, or a CRS.

The UE having a given type/capability may receive a B-SS (may support reception of a B-SS).

### <<Aspect 3-1>>

When the UE has received a notification indicating the presence of a synchronization signal in an additional channel (additional-synchronization signal, A-SS), the UE may receive the A-SS. The UE having the specific category/capability may attempt to receive the A-SS.

The notification indicating the presence of the A-SS may be notified by at least one signal/channel of a B-SS and a channel TDMed/FDMed/CDMed to the B-SS, may be notified by a signal/channel other than the signal/channel in a baseline channel (first band), or may be notified by a signal/channel in an additional channel (third band) other than the additional channel (second band) with the A-SS. The notification may indicate the time/frequency/code resource of the A-SS.

For example, in the example in FIG. 3, a notification indicating the presence of an A-SS in additional channel #1 may be notified by at least one signal/channel of a B-SS, a channel TDMed/FDMed/CDMed to the B-SS, and others, in the baseline channel. A notification indicating the presence of an A-SS in additional channel #2 may be notified by at least one signal/channel of the baseline channel and additional channel #1.

The A-SS may be constituted of a plurality of signals (for example, a plurality of synchronization signals). Each of the plurality of signals may have a plurality of sequences different from each other. The plurality of signals may be TDMed/FDMed/CDMed to each other. For example, the plurality of signals may include a primary SS (PSS) and a secondary SS (SSS).

The start timing (frame / half frame / subframe / one or more slots/symbols, position of the start symbol for every one or more slots) of the A-SS may be configured by the NW, may be determined based on the notification indicating the presence of the A-SS, or may be determined based on the SCS of the A-SS.

The A-SS may be TDMed/FDMed/CDMed to at least one channel/RS of a channel notifying (carrying) a specific parameter and an RS for demodulation. For example, the channel/RS may be a PBCH, a DMRS for PBCH, or a CRS.

The UE having a specific type/capability may be able to receive the A-SS (may support reception of the A-SS).

The A-SS may be TDMed/FDMed/CDMed to the B-SS in the same cell as that of the B-SS. The A-SS may be transmitted in a different cell from that of the B-SS.

### <<Aspect 3-1-1>>

When the B-SS and the A-SS have a specific correspondence relationship (relationship), the UE may assume that the B-SS and the ASS are transmitted by using the same transmit beam (spatial domain filter).

The specific correspondence relationship between the B-SS and the A-SS may follow at least one of correspondence relationships 1 and 2 below.

### {Correspondence Relationship 1}

The specific correspondence relationship between the B-SS and the A-SS may be notified by at least one signal/channel of a B-SS and a channel TDMed/FDMed/CDMed to the B-SS, may be notified by a signal/channel other than the signal/channel in the baseline channel, or may be notified by a signal/channel in an additional channel other than the additional channel with the A-SS.

### {Correspondence Relationship 2}

The B-SS and the A-SS having the specific correspondence relationship may be the B-SS and the A-SS overlapping in the time domain (the B-SS and the A-SS being FDMed/CDMed). The B-SS and the A-SS having a specific correspondence relationship may be the B-SS and the A-SS being within the same cell / frequency band / frequency range (for example, FR1, FR2) and the B-SS and the A-SS overlapping in the time domain.

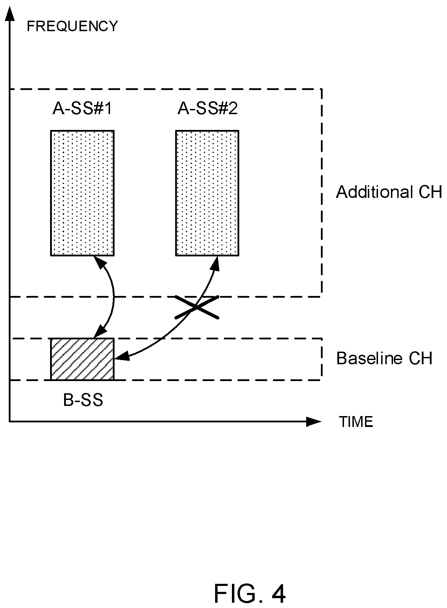

In the example in FIG. 4, a B-SS is transmitted in the baseline channel, and A-SSs #1 and #2 are transmitted in the additional channel. Since A-SS #2 overlaps the B-SS in the time domain, A-SS #1 has a specific correspondence relationship with the B-SS. Since A-SS #2 does not overlap the B-SS in the time domain, A-SS #2 does not have a specific correspondence relationship with the B-SS.

### <<Aspect 3-1-2>>

The UE may assume that the transmission periodicity of the B-SS and the transmission periodicity of the A-SS are the same or may assume that the transmission periodicity of a B-SS and the transmission periodicity of an A-SS are different from each other.

The UE may assume for the B-SS and the A-SS having the specific correspondence relationship that the transmission periodicity of the B-SS and the transmission periodicity of the A-SS are the same.

### <<Aspect 3-1-3>>

The signal sequence of the A-SS may be based on the signal sequence of the B-SS.

The signal sequence of the A-SS may be based on the signal sequence of the B-SS having a specific correspondence relationship with the A-SS.

According to this embodiment, the UE can appropriately perform synchronization/measurement according to capability.

### <Fourth Embodiment>

### «RRM»

The UE may measure (calculate) reception quality by using at least one SS of a B-SS and an A-SS and report the reception quality to the NW. The reception quality may be RSRP/RSRQ/RSSI/SINR.

The UE may be configured/indicated with report of reception quality by the NW. The UE may determine, without being configured/indicated with, report of reception quality. The time domain operation of measurement/report of reception quality may be periodic/semi-persistent/aperiodic.

The UE that has received only the B-SS may calculate reception quality by using the B-SS. The UE may report the reception quality by using a UL channel / UL signal in a baseline channel.

The UE that has received the A-SS may calculate reception quality by using the A-SS. The UE may report the reception quality by using a UL channel / UL signal in an additional channel. The UE that has received an A-SS may calculate reception quality by using at least one SS of the B-SS and the A-SS. The UE may report the reception quality by using the UL channel / UL signal in at least one of the baseline channel and the additional channel.

The UE that has received a B-SS and an A-SS having a specific correspondence relationship may follow at least one of calculation/report methods 1 to 4 below.

### {Calculation/Report Method 1}

The UE may calculate reception quality by using the B-SS. The UE may report the reception quality by using the UL channel / UL signal in the baseline channel.

### {Calculation/Report Method 2}

The UE may calculate reception quality by using the A-SS. The UE may report the reception quality by using the UL channel / UL signal in the additional channel.

### {Calculation/report Method 3}

The UE may calculate reception quality by using the B-SS and the ASS. The UE may report the reception quality by using the UL channel / UL signal in the baseline channel, may report the reception quality by using the UL channel / UL signal in the additional channel, or may report the reception quality by using the UL channel / UL signal over both the baseline channel and the additional channel.

### {Calculation/Report Method 4}

Which operation the UE performs among calculation/report methods 1 to 3 may be defined in a specification, may be configured/indicated, or may be determined by the UE.

According to this embodiment, the UE can appropriately perform measurement/report for RRM according to capability.

### <Fifth Embodiment>

### «RLM»

The UE may monitor (measure/calculate/RLM) radio link quality by using at least one SS of the B-SS and the A-SS. The radio link quality may be RSRP/RSRQ/RSSI/SINR.

The UE may be configured/indicated with the monitoring of radio link quality by the NW. The UE may determine, without being configured/indicated with, monitoring of radio link quality. The time domain operation of monitoring of radio link quality may be periodic/semi-persistent/aperiodic.

The UE that has received only the B-SS may monitor radio link quality by using the B-SS.

The UE that has received the A-SS may monitor radio link quality by using the A-SS. The UE that has received an A-SS may monitor radio link quality by using at least one SS of a B-SS and the A-SS.

The UE that has received the B-SS and the A-SS having a specific correspondence relationship may follow at least one of monitoring methods 1 to 4 below.

### {Monitoring Method 1}

The UE may monitor radio link quality by using the B-SS.

### {Monitoring Method 2}

The UE may monitor radio link quality by using the A-SS.

### {Monitoring Method 3}

The UE may monitor radio link quality by using the B-SS and the ASS.

### {Monitoring Method 4}

Which operation the UE performs among monitoring methods 1 to 3 may be defined in a specification or may be configured/indicated for the UE, or may be determined by the UE.

The UE may monitor radio link quality of only a PCell/PSCell or may monitor radio link quality of PCell/PSCell/SCell.

The UE may follow at least one of judgment methods 1 and 2 below.

### {Judgment Method 1}

When radio link quality is lower than a threshold Q_out (worse than the threshold Q_out or equal to or lower than the threshold Q_out), the UE may notify a higher layer of an alert (for example, an out-of-sync state). Q_out may be defined in a specification, may be configured/indicated by the NW, or may be determined by the UE.

At least two of Q_out when the B-SS is used, Q_out when the A-SS is used, and Q_out when the B-SS and the A-SS are used may be common (the same). At least two of Q_out when the B-SS is used, Q_out when the A-SS is used, and Q_out when the B-SS and the A-SS are used may be different from each other.

### {Judgment Method 2}

When radio link quality is equal to or higher than a threshold Q_in (better than the threshold Q_in, the same as the threshold Q_in, or higher than the threshold Q_in), the UE need not notify a higher layer of an alert or may notify the higher layer that there is no alert (for example, an in-sync state). Q_in may be defined in a specification, may be configured/indicated by the NW, or may be determined by the UE.

At least two of Q_in when the B-SS is used, Q_in when the A-SS is used, and Q_in when the B-SS and the A-SS are used may be common (the same). At least two of Q_in when the B-SS is used, Q_in when the A-SS is used, and Q_in when the B-SS and the A-SS are used may be different from each other.

According to this embodiment, the UE can appropriately perform measurement/report for RRM according to capability.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

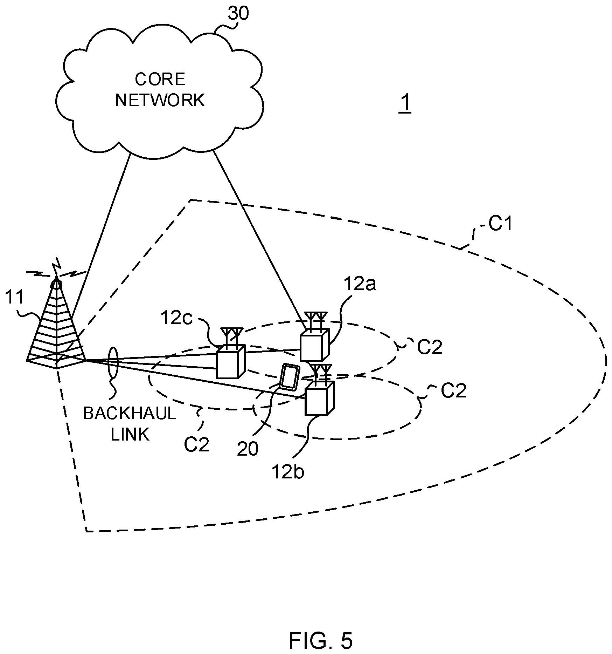

FIG. 5 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

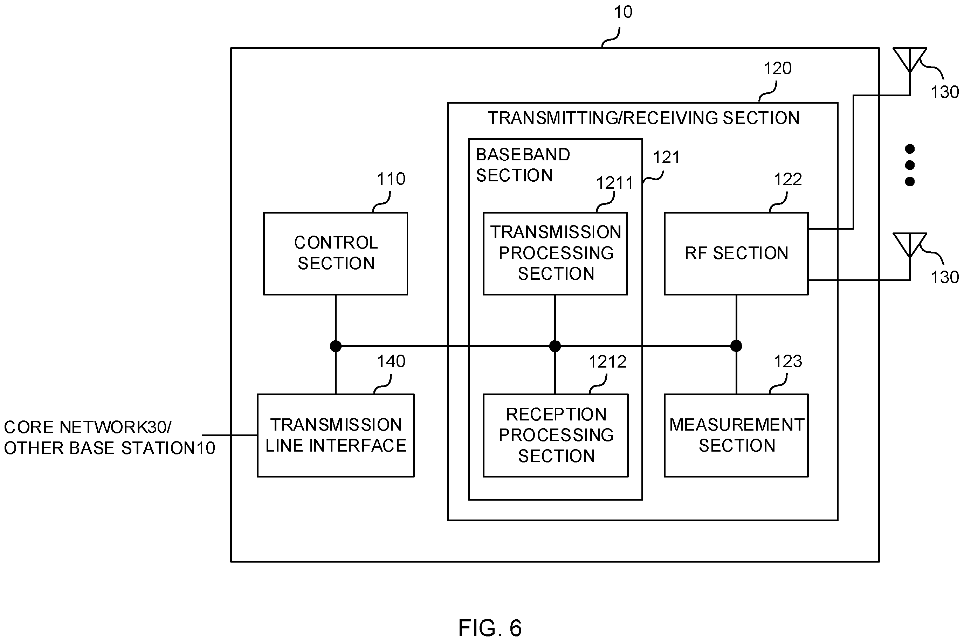

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, in a first band, information related to a second band. The control section 110 may simultaneously use a first signal in the first band and a second signal in the second band for at least one of synchronization, measurement, channel estimation, position estimation, and reference signal transmission.

The transmitting/receiving section 120 may transmit a first synchronization signal in the first band, transmit a notification indicating presence of a second synchronization signal in the second band, and transmit the second synchronization signal. The control section 110 may configure, for a terminal, at least one of synchronization, reception quality measurement, and radio link quality monitoring. For at least one of the synchronization, the reception quality measurement, and the radio link quality monitoring, the first synchronization signal and the second synchronization signal may be used simultaneously.

### (User Terminal)

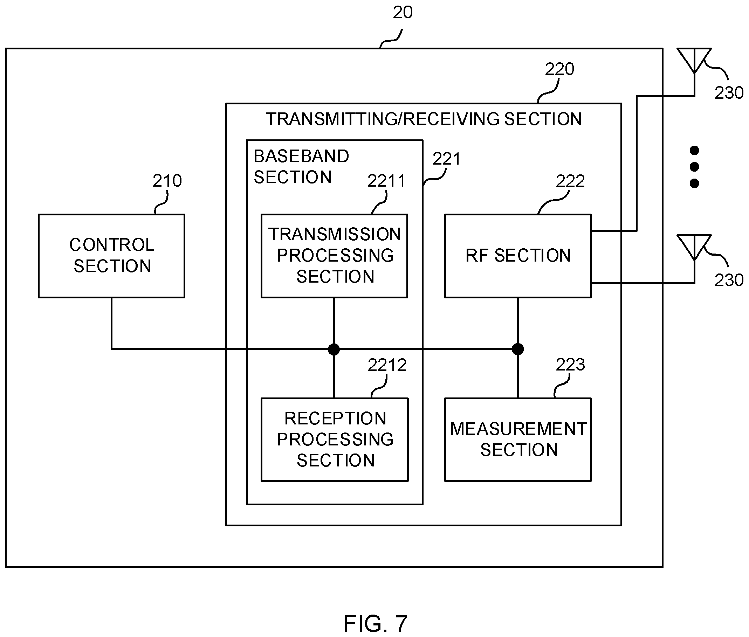

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive, in a first band (for example, a baseline channel), information related to a second band (for example, an additional channel). The control section 210 may simultaneously use a first signal in the first band and a second signal in the second band for at least one of synchronization, measurement, channel estimation, position estimation, and reference signal transmission.

The first band may be configured for at least one of a cell in which initial access is performed, a cell within a specific frequency range, and a cell of a specific duplex scheme.

The second band may be configured for at least one of a cell in which the first band is configured, a cell in which the first band is not configured, a cell within a specific frequency range, and a cell of a specific duplex scheme.

The control section 210 may report capability related to the second band, in the first band.

The transmitting/receiving section 220 may receive a first synchronization signal (for example, a B-SS) in the first band. When a notification indicating presence of the second synchronization signal (for example, an A-SS) in the second band is received, the control section 210 may simultaneously use the first synchronization signal and the second synchronization signal for at least one of the synchronization, the reception quality measurement, and the radio link quality monitoring.

The transmitting/receiving section 220 may receive the notification in the first band or a third band.

The first synchronization signal and the second synchronization signal may be transmitted in the same cell or may be transmitted in different cells.

When the first synchronization signal and the second synchronization signal have a specific relationship, at least one of the same spatial domain filter, the same periodicity, and the same sequence may be applied to the first synchronization signal and the second synchronization signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

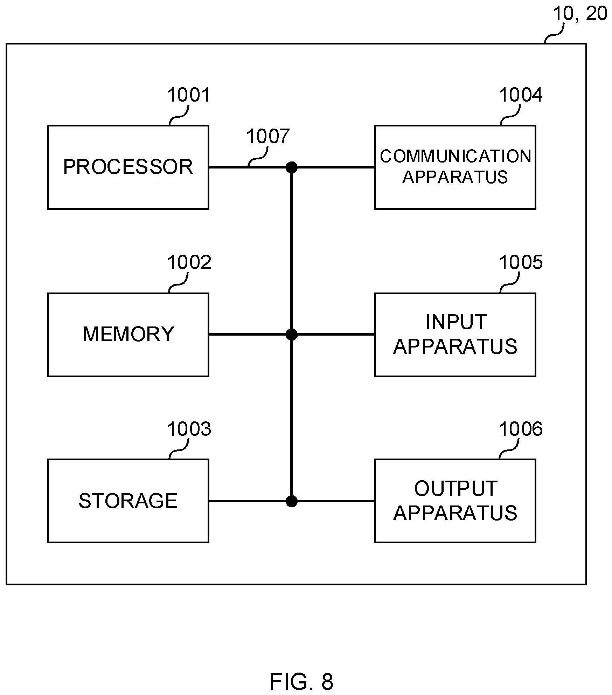

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a first synchronization signal in a first band; and
a control section that simultaneously uses, when a notification indicating presence of a second synchronization signal in a second band is received, the first synchronization signal and the second synchronization signal for at least one of synchronization, reception quality measurement, and radio link quality monitoring.

2. The terminal according to claim 1, wherein
the receiving section receives the notification in the first band or a third band.

3. The terminal according to claim 1 or 2, wherein
the first synchronization signal and the second synchronization signal are transmitted in a same cell or transmitted in different cells.

4. The terminal according to any one of claims 1 to 3, wherein
when the first synchronization signal and the second synchronization signal have a specific relationship, at least one of a same spatial domain filter, same periodicity, and a same sequence is applied to the first synchronization signal and the second synchronization signal.

5. A radio communication method for a terminal, the radio communication method comprising:
receiving a first synchronization signal in a first band; and
simultaneously using, when a notification indicating presence of a second synchronization signal in a second band is received, the first synchronization signal and the second synchronization signal for at least one of synchronization, reception quality measurement, and radio link quality monitoring.

6. A base station comprising:
a transmitting section that transmits a first synchronization signal in a first band, transmits a notification indicating presence of a second synchronization signal in a second band, and transmits the second synchronization signal; and
a control section that configures, for a terminal, at least one of synchronization, reception quality measurement, and radio link quality monitoring, wherein
the first synchronization signal and the second synchronization signal are simultaneously used for at least one of the synchronization, the reception quality measurement, and the radio link quality monitoring.
